(19) Europäisches Patentamt
European Patent Office
Office européen des brevets

(11) **EP 4 517 598 A1**

(12) **EUROPEAN PATENT APPLICATION**

(43) Date of publication:
05.03.2025 Bulletin 2025/10

(21) Application number: 23216961.5

(22) Date of filing: **15.12.2023**

(51) International Patent Classification (IPC):
*G06N 3/09* (2023.01)  *G06N 3/0442* (2023.01)
*G06N 3/0455* (2023.01)  *G06N 3/0464* (2023.01)
*G06N 3/047* (2023.01)  *G06N 3/0475* (2023.01)

(52) Cooperative Patent Classification (CPC):
**G06N 3/0442;** G06N 3/0455; G06N 3/0464;
G06N 3/047; G06N 3/0475; G06N 3/09

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **31.08.2023 KR 20230115777**

(71) Applicant: **Dong-eui University Industry-Academic Cooperation Foundation**
**Busan 47340 (KR)**

(72) Inventor: **Sim, Sunghyun**
**47735 Busan (KR)**

(74) Representative: **BCKIP Part mbB**
**MK1**
**Landsbergerstraße 98, 3.Stock**
**80339 München (DE)**

(54) **METHOD FOR PROVIDING TIME SERIES PREDICTION DEEP LEARNING NEURAL NETWORK AND METHOD FOR RECOGNIZING INFANTS' VOICES BASED ON THIS**

(57) Provided are a method and system for providing time-series prediction deep learning neural network by a time-series prediction application run by at least one processor of a terminal include: training a temporal relation-effect layer module; inputting first time point time-series data into the temporal relation-effect layer module; acquiring second time point time-series data according to the first time point time-series data from the temporal relation-effect layer module; and providing the second time point time-series data, wherein the temporal relation-effect layer module includes a temporal decomposition gate module, a temporal relation gate module, and a temporal effect gate module.

FIG. 3

EP 4 517 598 A1

**Description**

This application claims priority from Republic of Korea Patent Application No. 10-2023-0115777, filed on 2023-08-31.

**BACKGROUND**

Field

The present disclosure relates to a method and system for providing a time-series prediction deep learning neural network and, more particularly, to a method for providing a deep learning neural network capable of improving time-series data-based deep learning prediction performance based on learning according to a temporal relation and temporal effect, a system thereof, and a method for recognizing infants' voices using the same.

Related Art

In business systems in various fields, such as manufacturing and/or finance business, various types of time-series data, such as system resource performance (e.g., CPU usage, memory usage, etc.) and work throughput (e.g., transactions per unit time, etc.), are generated.

In order to operate the systems stably, time-series data on the performance and work throughput of system resources may be monitored according to preset references, and it is often necessary to detect or predict changes in the time-series data during monitoring and make appropriate determination.

For example, a professional investor at a securities company monitors changes in market values, such as exchange rates and/or interest rates and predicts timing and the amount of investment, while an operator of factory equipment examines temperature, pressure and/or flow information, predicts equipment conditions, and performs optimal control.

As such, a problem of time-series analysis is a problem of estimating future situations using past information that changes over time, and time-series prediction algorithms for this purpose are important in various business decisions.

However, because complex factors are involved in the analysis of time-series data, it may be difficult to pinpoint which factors affect each other in what relations.

In other words, there are numerous different types of potential factors in time-series data collected from business systems in various fields, but there are limitations in performing time-series analysis by considering all of them.

Therefore, in recent years, research on time-series analysis technology that grafts an artificial intelligence (AI) network structure exhibiting superior predictive performance compared to traditional statistical analysis, has increased.

For example, there is a time-series analysis technology that utilizes deep learning network algorithms, such as convolutional neural network (CNN), recurrent neural networks (RNN), long short-term memory models (LSTM), and/or gated recurrent unit (GRU).

However, in the case of such conventional AI-based time-series analysis methods, all factors that affect time-series analysis should be defined, and even if all of the factors are defined, a problem that points in time point the respective factors affect time-series analysis are very different still remains, having many limitations in being applied to actual work systems in various fields.

To solve the problem, a method of decomposing time-series data into multiple different time-series patterns using signal decomposition techniques, such as variational mode decomposition (VMD), and analyzing a time-series analysis through a model that learns the features of the decomposed time-series patterns has emerged.

However, the conventional variational mode decomposition has a problem in that, when applied to layers (CNN, RNN, LSTM, and/or GRU) used in existing artificial intelligence models, the input time-series data cannot be decomposed into similar time-series patterns within a corresponding layer.

In addition, when learning by decomposing input time-series data into different time-series patterns according to the related art, although correlations exist between individual time-series patterns, the input time-series data is each learned through different models, so there is a limitation in that the relation between each time-series pattern cannot be considered.

Therefore, an AI network with a more improved structure capable of independently learning and analyzing various factors in time-series data according to the relation and effect over time is required.

Meanwhile, the intelligent personal assistant may recognize a voice uttered by a user using speech recognition technology. However, since the majority of existing speech recognition technologies are learned based on adults' voices, when the infants' voices are applied to the existing speech recognition model, a recognition rate is low.

In addition, it is difficult to secure initial learning data required for learning an acoustic model to recognize children's voices, and due to children's unique playful and distracting speech, it is difficult to extract voices suitable for learning an acoustic model from children's voice data.

[Related art document]

[Patent document]

(Patent Document 1) KR 10-2011689 B1
(Patent Document 2) KR 2016-0071111 A

**SUMMARY**

The present disclosure provides a deep learning neural network that improves time-series data-based deep learning prediction performance based on learning according to a temporal relation and a temporal effect.
The present disclosure also provides a method for recognizing infants' voices based on analysis and prediction of infants' voices by performing feature learning by automatically analyzing differences in infants' voices with respect to a deep learning neural network that improves the time-series data-based deep learning prediction performance.
The present disclosure also provides a method for recognizing infants' voices based on a time-series prediction deep learning neural network that updates infants' voices according to a feedback input including a guardian's voice.
However, the present disclosure and the technical problems to be achieved by the present disclosure are not limited to the technical problems described above, and other technical problems may exist.
In an aspect, a method and system for providing time-series prediction deep learning neural network by a time-series prediction application run by at least one processor of a terminal include: training a temporal relation-effect layer module; inputting first time point time-series data into the temporal relation-effect layer module; acquiring second time point time-series data according to the first time point time-series data from the temporal relation-effect layer module; and providing the second time point time-series data, wherein the temporal relation-effect layer module includes a temporal decomposition gate module, a temporal relation gate module, and a temporal effect gate module.
The temporal decomposition gate module may be a deep learning module using the first time point time-series data as input data and time-series pattern decomposition data, which is data obtained by decomposing the first time point time-series data into a plurality of different time-series patterns through a variational mode decomposition, as output data.
The training of the temporal relation-effect layer module may include training the temporal decomposition gate module based on a training data set including a plurality of time-series data and time-series pattern decomposition data respectively corresponding to the plurality of time-series data.
The temporal relation gate module may be a deep learning module using hidden state matrix data including k (k>0) hidden state data and the time-series pattern decomposition data as input data and temporal relation analysis data, which is data obtained by analyzing multivariable temporal relation between the hidden state matrix data and the time-series pattern decomposition data, as output data.
The training of the temporal relation-effect layer module may include training the temporal relation gate module based on a training data set including a plurality of hidden state matrix data and a plurality of time-series pattern decomposition data.
The temporal effect gate module may be a deep learning module using the hidden state matrix data including k (k>0) hidden state data and the time-series pattern decomposition data as input data and temporal effect analysis data, which is data obtained by analyzing a multivariable temporal effect between the hidden state matrix data and the time-series pattern decomposition data, as output data.
The training of the temporal relation-effect layer module may include training the temporal effect gate module based on a training data set including a plurality of hidden state matrix data and a plurality of time-series pattern decomposition data.
The hidden state data may be data learned by accumulating past information of the first time point time-series data based on a predetermined time point.
The acquiring of the second time point time-series data may include: updating hidden state data at a predetermined time point t through pattern learning based on input data at the time point t and hidden state data at a time point t-1; and updating hidden state data at a time point t+1 through pattern learning based on input data at the time point t+1 and the hidden state data at the time point t.
The acquiring of the second time point time-series data may include acquiring the second time point time-series data based on time-series pattern decomposition data which is output data of the temporal decomposition gate module, temporal relation analysis data which is output data of the temporal relation gate module, and temporal effect analysis data which is output data of the temporal effect gate module.

The providing of the second time point time-series data may include providing the second time point time-series data based on a predetermined application service.

In another aspect, a system for providing time-series prediction deep learning neural network includes: at least one memory in which a time-series prediction application is stored; and at least one processor configured to read the time-series prediction application stored in the memory and provide a time-series prediction deep learning neural network, wherein an instruction of the time-series prediction application includes an instruction performing training a temporal relation-effect layer module, inputting first time point time-series data into the temporal relation-effect layer module, acquiring second time point time-series data according to the first time point time-series data from the temporal relation-effect layer module, and providing the second time point time-series data, wherein the temporal relation-effect layer module includes a temporal decomposition gate module, a temporal relation gate module, and a temporal effect gate module.

In another aspect, a method for recognizing infants' voice based on a time-series prediction deep learning neural network, as a method for providing an infant education platform providing service by an infant education application run by at least one processor of a terminal, includes: training a temporal relation-effect sequence-to-sequence layer module; acquiring real-time voice; detecting infant voice data from the acquired real-time voice; inputting the detected infant voice data into the trained temporal relation-effect sequence-to-sequence layer module; generating answer data based on query data output from the temporal relation-effect sequence-to-sequence layer module; and providing the infant education platform providing service based on the generated answer data.

The method and system for providing a time-series prediction deep learning neural network according to an embodiment of the present disclosure provide a deep learning neural network that improves time-series data-based deep learning prediction performance based on learning according to a temporal relation and a temporal effect, thereby performing time-series prediction deep learning based on time-series data by considering all potential factors that may exist in the time-series data, regardless of a form thereof with high accuracy.

In addition, the method and system for providing a time-series prediction deep learning neural network according to an embodiment of the present disclosure provide a deep learning neural network having a structure of learning a relation and effect between temporal factors included in predetermined time-series data on a deep learning neural network layer level by itself, thereby implementing time-series prediction deep learning having high accuracy (recognition rate) to improve performance and quality of various application services utilizing result data.

In addition, the method for recognizing infants' voices based on an infant speech recognition network according to an embodiment of the present disclosure provides an infant education platform service based on a deep learning network structure that improves voice data-based deep learning prediction performance based on learning according to a temporal relation and a temporal effect, thereby performing service task processing according to voice data recognized with higher accuracy.

Through this, the method for recognizing infants' voices based on the infant speech recognition network according to an embodiment of the present disclosure has the effect of further improving the performance and usability of the infants education platform service.

In addition, the method for recognizing infants' voices based on a time-series prediction deep learning neural network according to an embodiment of the present disclosure has an effect of increasing an infants' speech recognition rate by using a deep learning network structure that performs feature learning by automatically analyzing difference in infants' voices.

In addition, the method for recognizing infants' voices based on a time-series prediction deep learning neural network according to an embodiment of the present disclosure updates infants' voices according to a feedback input including a guardian's voice, so that infant voice data is corrected to be used according to an input feedback although the corresponding infant voice data is unsuitable for learning, thereby increasing the usability of infant voice data.

However, the effects that may be acquired from the present disclosure are not limited to the effects mentioned above, and other effects not mentioned may be clearly understood from the description below.


**BRIEF DESCRIPTION OF THE DRAWINGS**

FIG. 1 is a conceptual diagram of a system for providing a time-series prediction deep learning neural network according to an embodiment of the present disclosure.
FIG. 2 is an internal block diagram of a terminal according to an embodiment of the present disclosure.
FIG. 3 is a conceptual diagram illustrating a temporal relation-effect layer module according to an embodiment of the present disclosure.
FIG. 4 illustrates examples of input data and output data of a temporal relation-effect layer module according to an embodiment of the present disclosure.

FIG. 5 illustrates an example of a diagram illustrating output data of a temporal decomposition gate module according to an embodiment of the present disclosure.

FIG. 6 illustrates an example of a diagram illustrating hidden state matrix data according to an embodiment of the present disclosure.

FIG. 7 is a flowchart illustrating a method for providing a time-series prediction deep learning neural network according to an embodiment of the present disclosure.

FIG. 8 is a conceptual diagram illustrating a temporal relation-effect sequence-to-sequence layer module TSSL according to an embodiment of the present disclosure.

FIG. 9 is a flowchart illustrating a method for implementing an infant education platform providing service according to an embodiment of the present disclosure.

## DESCRIPTION OF EMBODIMENTS

As the inventive concept allows for various changes and numerous embodiments, particular embodiments will be illustrated in the drawings and described in detail in the written description. Effects and features of the present disclosure, and a method for achieving them will become apparent with reference to the embodiments described below in detail in conjunction with the drawings. However, the present disclosure is not limited to the embodiments disclosed below and may be implemented in various forms. In the following embodiments, terms, such as first, second, etc. Are used for the purpose of distinguishing one component from another, not in a limiting sense. Also, a singular expression includes a plural expression unless the context clearly dictates otherwise. In addition, terms, such as "including" or "having" means that the features or components described in the specification are present, and do not preclude the possibility that one or more other features or components will be added. In addition, in the drawings, the size of the components may be exaggerated or reduced for convenience of description. For example, the size and thickness of each component shown in the drawings are arbitrarily indicated for convenience of description, so the present disclosure is not limited thereto.

Hereinafter, embodiments of the present disclosure will be described in detail with reference to the accompanying drawings, and when described with reference to the drawings, the same or corresponding components are given the same reference numerals, and repeated descriptions thereof will be omitted.

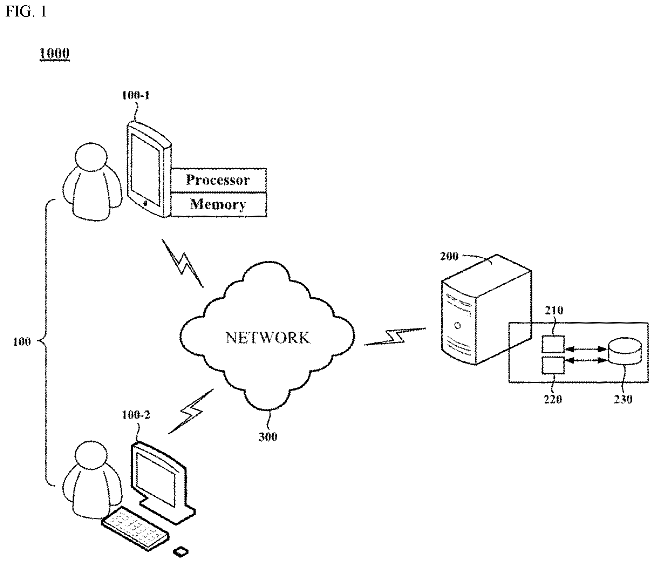

FIG. 1 is a conceptual diagram of a system for providing a time-series prediction deep learning neural network according to an embodiment of the present disclosure.

Referring to FIG. 1, the time-series prediction deep learning neural network providing system 1000 (hereinafter, referred to as time-series prediction system) according to an embodiment of the present disclosure may implement a time-series prediction service providing a deep learning neural network that improves time-series data-based deep learning prediction performance based on learning according to a temporal relation and a temporal effect.

In an embodiment, the time-series prediction system 1000 implementing a time-series prediction service may include a terminal 100, a service provider server 200, and a network 300.

Here, the terminal 100 and/or the service provider server 200 may be connected through the network 300.

Here, the network 300 according to an embodiment refers to a connection structure in which information may be exchanged between nodes, such as the terminal 100 and/or the service provider server 200.

Examples of the network 300 include 3rd generation partnership project (3GPP) network, long term evolution (LTE) network, world interoperability for microwave access (WIMAX) network, Internet, local area network (LAN), wireless local area network (WLAN), wide area network (WAN), personal area network (PAN), Bluetooth network, satellite broadcasting network, analog broadcasting network, and/or digital multimedia broadcasting (DMB) network, etc. but are not limited thereto.

Hereinafter, the terminal 100 and the service provider server 200 implementing the time-series prediction system 1000 will be described in detail with reference to the accompanying drawings.

- Terminal 100

The terminal 100 according to an embodiment of the present disclosure may be a computing device in which a time-series prediction application (hereinafter, referred to as application) providing a time-series prediction service is installed.

In detail, from a hardware perspective, the terminal 100 may include a mobile type computing device 100-1 and/or a desktop type computing device 100-2 on which an application is installed.

Here, the mobile type computing device 100-1 may be a mobile device in which an application is installed.

For example, the mobile type computing device 100-1 may include a smartphone, a mobile phone, a digital broadcasting device, a personal digital assistant (PDA), a portable multimedia player (PMP), and/or a tablet PC.

In addition, the desktop type computing device 100-2 may be a wired/wireless communication-based device with an application installed therein.

For example, the desktop type computing device 100-2 may include a personal computer, such as a fixed desktop PC, a laptop computer, and/or, an ultrabook.

According to an embodiment, the terminal 100 may further include a server computing device that provides a time-series prediction service environment.

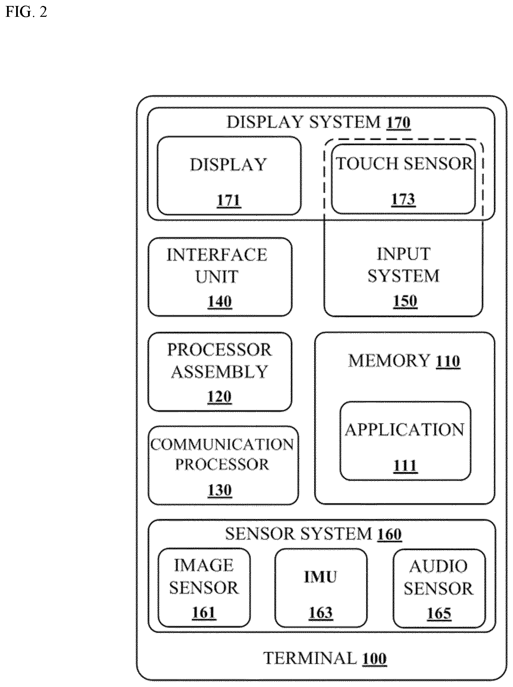

FIG. 2 is an internal block diagram of the terminal 100 according to an embodiment of the present disclosure.

Meanwhile, referring to FIG. 2, from a functional perspective, the terminal 100 may include a memory 110, a processor assembly 120, a communication processor 130, an interface unit 140, an input system 150, a sensor system 160, and a display system 170. In an embodiment, the terminal 100 may include the above components within a housing.

In detail, the memory 110 may store an application 111.

Here, the application 111 may store one or more of various applications, data, and commands for providing a time-series prediction service environment.

That is, the memory 110 may store commands and data that may be used to create a time-series prediction service environment.

In addition, the memory 110 may include a program area and a data area.

Here, the program area according to an embodiment may be linked between an operating system (OS) that boots the terminal 100 and functional elements.

In addition, the data area according to an embodiment may store data generated according to the use of the terminal 100.

In addition, the memory 110 may include at least one non-transitory computer-readable storage medium and a temporary computer-readable storage medium.

For example, the memory 110 may be a variety of storage devices, such as ROM, EPROM, flash drive, hard drive, etc., and may include web storage that performs a storage function of the memory 110 on the Internet.

The processor assembly 120 may include at least one processor capable of executing instructions of the application 111 stored in the memory 110 to perform various tasks for creating a time-series prediction service environment.

In an embodiment, the processor assembly 120 may control an overall operation of components through the application 111 of the memory 110 to provide a time-series prediction service.

In detail, the processor assembly 120 may be a system-on-chip (SOC) suitable for the terminal 100 that includes a central processing unit (CPU) and/or a graphics processing unit (GPU).

In addition, the processor assembly 120 may execute an operating system (OS) and/or application programs stored in the memory 110.

In addition, the processor assembly 120 may control each component mounted on the terminal 100.

In addition, the processor assembly 120 may internally communicate with each component through a system bus and may include one or more bus structures, including a local bus.

In addition, the processor assembly 120 may be implemented to include at least one of application specific integrated circuits (ASICs), digital signal processors (DSPs), digital signal processing devices (DSPDs), programmable logic devices (PLDs), field programmable gate arrays (FPGAs), controllers, micro-controllers, microprocessors, and/or electrical units for performing other functions.

The communication processor 130 may include one or more devices for communicating with external devices. The communication processor 130 may communicate through a wireless network.

In detail, the communication processor 130 may communicate with a predetermined device that stores a content source for implementing a time-series prediction service environment.

In addition, the communication processor 130 may communicate with various user input components, such as a controller that receives a user input.

In an embodiment, the communication processor 130 may transmit and receive various data related to the time-series prediction service to another terminal 100 and/or an external server.

The communication processor 130 may transmit and receive data wirelessly to and from at least one of a base station, the external terminal 100, and a predetermined server on a mobile communication network established through a communication device capable of performing technical standards or communication methods for mobile communication (e.g., long term evolution (LTE), long term evolution-advanced (LTE-A), 5G new radio (NR), WIFI) or short-distance communication method.

The sensor system 160 may include various sensors, such as an image sensor 161, a position sensor (IMU) 163, an audio sensor 165, a distance sensor, a proximity sensor, and a contact sensor.

Here, the image sensor 161 may capture images (images and/or videos, etc.) of a physical space around the terminal 100.

In detail, the image sensor 161 may image a predetermined physical space through a camera disposed toward the outside of the terminal 100.

In an embodiment, the image sensor 161 may be placed on the front or/and back of the terminal 100 and image a physical space in a direction in which the image sensor 161 is placed.

The image sensor 161 may include an image sensor device and an image processing module.

In detail, the image sensor 161 may process a still image or video acquired by an image sensor device (e.g., CMOS or CCD).

In addition, the image sensor 161 may process the still image or video acquired through the image sensor device using an image processing module to extract necessary information and transmit the extracted information to the processor.

This image sensor 161 may be a camera assembly including at least one camera.

Here, the camera assembly may include a general camera that images a visible light band and may further include a special camera, such as an infrared camera or a stereo camera.

In addition, the image sensor 161 as described above may be included and operated in the terminal 100 according to an embodiment, or may be included in an external device (e.g., an external server, etc.) to operate through linkage based on the aforementioned communication processor 130 and/or the interface unit 140.

The position sensor (IMU) 163 may detect at least one of movement and acceleration of the terminal 100. For example, the position sensor (IMU) 163 may include a combination of various sensors, such as an accelerometer, a gyroscope and/or a magnetometer.

In addition, the position sensor (IMU) 163 may recognize spatial information on a physical space around the terminal 100 by interworking with the position communication processor 130, such as a GPS of the communication processor 130.

The audio sensor 165 may recognize sound around the terminal 100.

In detail, the audio sensor 165 may include a microphone capable of detecting a voice input from the user who uses the terminal 100.

In an embodiment, the audio sensor 165 may receive voice data required for a time-series prediction service from the user.

The interface unit 140 may connect the terminal 100 to communicate with one or more other devices.

In detail, the interface unit 140 may include a wired and/or wireless communication device compatible with one or more different communication protocols.

Through the interface unit 140, the terminal 100 may be connected to various input/output devices.

For example, the interface unit 140 may be connected to an audio output device, such as a headset port or a speaker, to output audio.

As an example, it is described that the audio output device is connected through the interface unit 140, but an embodiment in which the audio output device is installed inside the terminal 100 may also be included.

In addition, for example, the interface unit 140 may be connected to an input device, such as a keyboard and/or mouse, to acquire user input.

The interface unit 140 may include at least one of a wired/wireless headset port, an external charger port, a wired/wireless data port, a memory card port, a port connecting a device including an identification module, an audio input/output (I/O) port, a video I/O port, an earphone port, a power amplifier, an RF circuit, a transceiver, and other communication circuits:

The input system 150 may detect a user input (e.g., gesture, voice command, button operation, or other type of input) related to the time-series prediction service.

In detail, the input system 150 may include the image sensor 161 that detects a predetermined button, a touch sensor, a user motion input, and/or the audio sensor 165 that detects a user voice input.

In addition, the input system 150 may be connected to an external controller through the interface unit 140 to receive a user input.

The display system 170 may output various information related to the time-series prediction service as graphic images.

In an embodiment, the display system 170 may display various user interfaces, time-series data, images, and/or text for the time-series prediction service.

Such a display may include at least one of a liquid crystal display (LCD), a thin film transistor-liquid crystal display (TFT LCD), an organic light-emitting diode (OLED), a flexible display, a 3D display and/or an e-ink display, but is not limited thereto.

In addition, according to an embodiment, the display system 170 may include a display 171 that outputs an image and a touch sensor 173 that detects a user's touch input.

For example, the display 171 may form an interlayer structure or may be integrally formed with the touch sensor 173 to implement a touch screen.

The touch screen may function as a user input unit that provides an input interface between the terminal 100 and the user, and at the same time, may provide an output interface between the terminal 100 and the user.

Meanwhile, the terminal 100 according to an embodiment of the present disclosure may perform deep learning related to a time-series prediction service based on a predetermined deep-learning neural network.

Here, the deep learning neural network according to an embodiment may include Custom Diffusion Deep-learning Neural Networks, Stable Diffusion Deep-learning Neural Networks, CLIP(Contrastive Language-Image Pre-training Encoder), VGG-19, GPT-3, GPT-3.5, EfficientNet, ResNet, ARIMA(Autoregressive Integrated Moving Average), VAR(Vector Auto Regression), RNN(Recurrent Neural Networks), LSTM(Long Short-Term Memory models), GRU(Gated Recurrent Unit), GAN(Generative Adversarial Networks), DualStyleGAN, StyleGAN, Graph Convolution Network(GCN), CNN(Convolution Neural Network, CNN), DPSNet(Deep Plane Sweep Network, DPSNet), AGN(Attention Guided Network, AGN), R-CNN(Regions with CNN features), Fast R-CNN, Faster R-CNN, Mask R-CNN and/or U-Net network, etc., but is not limited thereto.

In detail, in an embodiment, the terminal 100 may perform deep-learning required for a time-series prediction service by interworking with at least one deep learning neural network capable of implementing a temporal relation-effect layer module according to an embodiment of the present disclosure.

Meanwhile, according to an embodiment, the terminal 100 may further perform at least a portion of functional operations performed by the service provider server 200, which will be described below.

- Service Provider Server 200

Meanwhile, the service provider server 200 according to an embodiment of the present disclosure may perform a series of processes to provide a time-series prediction service.

In detail, in an embodiment, the service provider server 200 may provide a time-series prediction service by exchanging data necessary to drive the time-series prediction service process in an external device, such as the terminal 100, with the external device.

In more detail, in an embodiment, the service provider server 200 may provide an environment in which the application 111 operates in an external device (in an embodiment, the mobile type computing device 100-1 and/or the desktop type computing device 100-2, etc.

To this end, the service provider server 200 may include an application program, data, and/or commands for the application 111 to operate, and may transmit and receive various data based thereon with the external device.

In addition, in an embodiment, the service provider server 200 may train the temporal relation-effect layer module according to an embodiment of the present disclosure.

Here, the temporal relation-effect layer module according to an embodiment may be a deep learning module in which predetermined first time point time-series data is input data and predetermined second time point time-series data predicted based on the input first time point time-series data is output data.

In addition, in an embodiment, the service provider server 200 may acquire time-series target data.

Here, the time-series target data according to an embodiment may refer to time-series data to be input to the temporal relation-effect layer module (i.e., predetermined first time point time-series data based on which time-series prediction is to be performed through the temporal region-effect layer module).

In addition, in an embodiment, the service provider server 200 may input the acquired time-series target data into the temporal relation-effect layer module.

In addition, in an embodiment, the service provider server 200 may acquire time-series prediction data by interworking with the temporal relation-effect layer module that receives the time-series target data.

Here, the time-series prediction data according to an embodiment may refer to output data (i.e., predetermined second time point time-series data acquired through time-series prediction deep learning based on the temporal relation-effect layer module).

In addition, in an embodiment, the service provider server 200 may provide the acquired time-series prediction data in various manners.

In an embodiment, the service provider server 200 may provide time-series prediction data based on a predetermined application service (e.g., speech recognition service and/or automatic transaction service, etc.) that utilizes time-series data.

In addition, in an embodiment, the service provider server 200 may perform deep learning required for a time-series prediction service based on a predetermined deep-learning neural network.

In detail, in an embodiment, the service provider server 200 may perform deep learning required for a time-series prediction service by interworking with at least one deep learning neural network capable of implementing the temporal relation-effect layer module according to an embodiment of the present disclosure.

In more detail, in an embodiment, the service provider server 200 may read a predetermined deep learning neural network driving program built to perform the deep learning from a memory module 230.

Also, the service provider server 200 may perform deep learning required for the time-series prediction service according to the read predetermined deep learning neural network system.

Here, the deep learning neural network according to an embodiment may include Custom Diffusion Deep-learning Neural Networks, Stable Diffusion Deep-learning Neural Networks, CLIP (Contrastive Language-Image Pre-training Encoder), VGG-19, GPT-3, GPT- 3.5, EfficientNet, ResNet, ARIMA (Autoregressive Integrated Moving Average), VAR (Vector Auto Regression), RNN (Recurrent Neural Networks), LSTM (Long Short-Term Memory models), GRU (Gated Recurrent Unit), GAN (Generative Adversarial Networks)), DualStyleGAN, StyleGAN, Graph Convolution Network (GCN), Convolution Neural Network (CNN), Deep Plane Sweep Network (DPSNet), Attention Guided Network (AGN), R-CNN (Regions with CNN features), Fast R-CNN, Faster R-CNN, Mask R-CNN, and/or U-Net network, etc., but is not limited thereto.

Here, according to an embodiment, the deep learning neural network may be directly included in the service provider server 200 or may be implemented as a separate device and/or server from the service provider server 200.

In the following description, the deep learning neural network is described as being included and implemented in the service provider server 200, but is not limited thereto.

In addition, in an embodiment, the service provider server 200 may store and manage various application programs, commands, and/or data for implementing the time-series prediction service.

In an embodiment, the service provider server 200 may store and manage at least one of time-series data, a data processing algorithm, a deep learning algorithm, and/or a user interface.

In addition, in an embodiment, the service provider server 200 may transmit and receive various application programs, commands, and/or data for implementing the time-series prediction service to and from the external device.

However, in the embodiment of the present disclosure, the functional operations that the service provider server 200 are not limited to those described above and the service provider server 200 may further perform other functional operations.

Meanwhile, referring to FIG. 1 further, in an embodiment, the service provider server 200 may be implemented as a predetermined computing device including at least one processor module 210 for data processing, at least one communication module 220 for data exchange with an external device, and at least one memory module 230 storing various applications, data, and/or commands for providing the time-series prediction service.

Here, the memory module 230 may store one or more of an operating system (OS), various application programs, data, and commands for providing the time-series prediction service.

In addition, the memory module 230 may include a program area and a data area.

Here, the program area according to an embodiment may be linked between an operating system (OS) that boots a server and functional elements.

In addition, the data area according to an embodiment may store data generated according to the use of the server.

In addition, the memory module 230 may be a variety of storage devices, such as ROM, RAM, EPROM, flash drive, hard drive, etc., and may be a web storage that performs a storage function of the memory module 230 on the Internet.

In addition, the memory module 230 may be a recording medium that is removable from the server.

Meanwhile, the processor module 210 may control an overall operation of each unit described above in order to implement the time-series prediction service.

In detail, the processor module 210 may be a system-on-chip (SOC) suitable for a server including a central processing unit (CPU) and/or a graphics processing unit (GPU).

In addition, the processor module 210 may execute an operating system (OS) and/or application programs stored in the memory module 230.

In addition, the processor module 210 may control each component mounted on the server.

In addition, the processor module 210 may internally communicate with each component through a system bus and may include one or more bus structures, including a local bus.

In addition, the processor module 210 may be implemented using at least one of application specific integrated circuits (ASICs), digital signal processors (DSPs), digital signal processing devices (DSPDs), programmable logic devices (PLDs), field programmable gate arrays (FPGAs), and controllers.), micro-controllers, microprocessors, and/or other electrical units for performing functions.

In the above, it is described that the service provider server 200 according to an embodiment of the present disclosure performs the functional operations as described above. However, according to an embodiment, at least some of the functional operations performed by the service provider server 200 may be performed by an external device (e.g., the terminal 100, etc.), or at least some of the functional operations performed in the external device may be further performed in the service provider server 200 in various embodiments.

- Temporal Relation-Effect Layer Module (TREL)

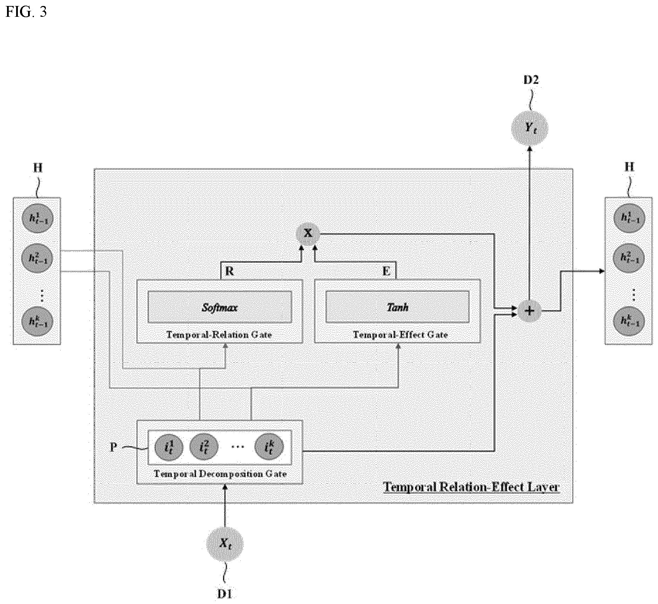

FIG. 3 is a conceptual diagram illustrating a temporal relation-effect layer module TREL according to an embodiment of the present disclosure.

Referring to FIG. 3, the temporal relation-effect layer module TREL according to an embodiment of the present disclosure may be a deep learning module in which predetermined first time point time-series data D1 is input data and predetermined second time point time-series data D2 predicted based on the input first time point time-series data D1 is output data.

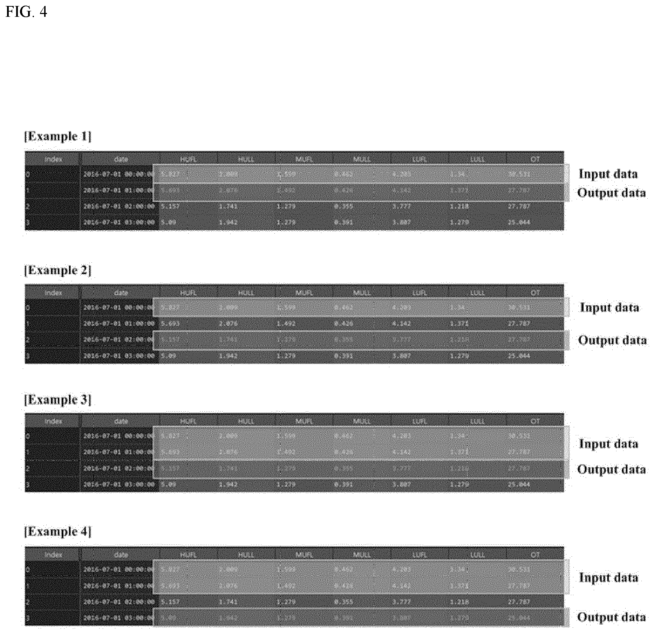

FIG. 4 is examples of input data and output data of the temporal relation-effect layer module TREL according to an embodiment of the present disclosure.

Referring to FIG. 4, for example, the temporal relation-effect layer module TREL may use data at a first time point as input data and data at a second time point predicted based on the input data at the first time point as output data.

As another example, the temporal relation-effect layer module TREL may use data at the first and second time points as input data and data at a third time point predicted based on the input data at the first and second time points as output data.

With further reference to FIG. 3, in an embodiment, the temporal relation-effect layer module TREL may include a temporal decomposition gate module TDG, a temporal relation gate module TRG, and a temporal effect gate module TEG.

Here, in FIG. 3, in order to prevent the features according to an embodiment of the present disclosure from being blurred, the temporal relation-effect layer module TREL is described as including the components as described above.

However, according to an embodiment, a person skilled in the art may understand that other general-purpose components other than those shown in FIG. 3 may be further included or some components shown in FIG. 3 may be omitted.

In detail, the temporal decomposition gate module TDG according to an embodiment may be a deep learning module that uses the predetermined first time point time-series data D1 as input data and data (P: hereinafter, referred to as time-series pattern decomposition data) obtained by decomposing the input first time point time-series data D1 into a plurality of different time-series patterns through variational mode decomposition (VMD) as output data.

To this end, in an embodiment, the temporal decomposition gate module TDG may perform learning according to Equation 1 below based on a training data set including a plurality of time-series data and the time-series pattern decomposition data P corresponding to each of the time-series data.

[Equation 1]

$$i_t^j = w_i \left( i_t^j \right) + b_i \ (1 \le j \le k)$$

Here, a parameter 'k' may be a parameter representing the number of time-series patterns decomposed through the variational mode decomposition (VMD).

In addition, a parameter 'j' may be a parameter representing the number of dimensions of a hidden layer in the temporal decomposition gate module TDG.

In addition, a parameter

$$`i_t^j`$$

may be a parameter representing a value of a j-th decomposed time-series pattern at a predetermined time point t (t>0).

In an embodiment, when receiving the predetermined time-series data, the temporal decomposition gate module TDG may decompose the input time-series data into a plurality of different time-series patterns based on variational mode decomposition (VMD) and perform a training process of learning the same through a linear layer based on Equation 1.

Therefore, the temporal decomposition gate module TDG trained as above may acquire time-series pattern decomposition data P according to the predetermined first time point time-series data D1 based on Equation 1.

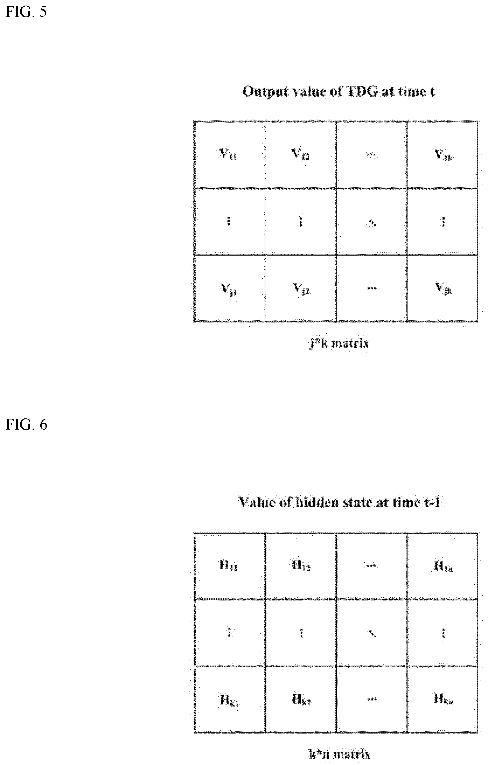

FIG. 5 is an example of a diagram illustrating output data of the temporal decomposition gate module TDG according to an embodiment of the present disclosure.

Accordingly, in an embodiment, the temporal decomposition gate module TDG may output the time-series pattern decomposition data P in the form shown in FIG. 5.

In addition, the temporal relation gate module TRG according to an embodiment may be a deep learning module that uses output data (i.e., time-series pattern decomposition data P of the temporal decomposition gate module TDG and k (k>0) hidden state data (H: hereinafter, referred to as "hidden state matrix data") as input data and multivariable temporal relation analysis data (R: hereinafter, referred to as "temporal relation analysis data") between the input data as output data.

FIG. 6 is an example of a diagram illustrating hidden state matrix data H according to an embodiment of the present disclosure.

Here, referring to FIG. 6, for reference, hidden state data may refer to data that has been learned by accumulating past information based on a predetermined time point based on the predetermined time-series data.

That is, in an embodiment, the hidden state data may be data learned by accumulating past information based on a predetermined time point based on the predetermined first time point time-series data D 1.

Therefore, the hidden state data for a predetermined time point t may be t-1 hidden state data, which is data learned by accumulating past information up to a time point t-1 of the first time point time-series data D1.

Here, a parameter 'k' in FIG. 6 may be a parameter representing the number of time-series patterns decomposed through variational mode decomposition (VMD).

In addition, a parameter 'n' in FIG. 6 may be a parameter representing the number of dimensions in a hidden state.

Returning again, in an embodiment, in order to output temporal relation analysis data R, the temporal relation gate module TRG may perform learning based on Equation 2 below based on the training data set including the plurality of time-series pattern decomposition data P and the hidden state matrix data H.

[Equation 2]

$$\alpha = softmax(W_{IH}I_t + W_{HH}H_{t-1})$$

Here, the parameter $\alpha$ may learn the relation between the weight value of the decomposed time-series pattern at time point t and the hidden states at time point t-1 and the decomposed time-series pattern and the hidden states that has learned a previous state input by taking a softmax function.

In addition, the parameter $W_{IH}$ refers to the weight value of the decomposed time-series pattern and the hidden state, and the parameter $I_t$ refers to the entire input value of

$$i_t^j.$$

In addition, the parameter $W_{HH}$ refers to a weight between hidden states, and $H_{t-1}$ refers to the hidden state value at time point t-1.

Therefore, the temporal relation gate module TRG trained as above may acquire the temporal relation analysis data R according to the predetermined time-series pattern decomposition data P and hidden state matrix data H based on Equation 2.

In other words, the temporal relation gate module TRG may acquire the temporal relation analysis data R that analyzes the relation between the predetermined time-series pattern decomposition data P as shown in FIG. 5 and predetermined hidden state matrix data H as shown in FIG. 6 based on Equation 2.

Also, the temporal relation gate module TRG may provide the acquired temporal relation analysis data R as output data.

In addition, the temporal effect gate module TEG according to an embodiment may a deep learning module that uses output data (i.e., time-series pattern decomposition data P) of the temporal decomposition gate module TDG and k hidden state data (i.e., hidden state matrix data H) as input data and multivariable temporal effect analysis data (E: hereinafter, referred to as temporal effect analysis data) between the input data as output data.

To this end, in an embodiment, the temporal effect gate module TEG may perform learning according to Equation 3 below based on the training data set including a plurality of time-series pattern decomposition data P and hidden state matrix data H.

[Equation 3]

$$\beta = tanh(W_{IH}I_t + W_{HH}H_{t-1})$$

Here, the parameter P may learn the effect between the weight value of the decomposed time-series pattern at time point t and the hidden states at time point t-1 and the decomposed time-series pattern and the hidden states that has learned a previous state input by taking a hyperbolic-tangent function.

In addition, the parameter $W_{IH}$ refers to the weight value of the decomposed time-series pattern and the hidden state, and the parameter $I_t$ refers to the entire input value of

$$i_t^j.$$

In addition, the parameter $W_H$ refers to a weight between hidden states, and $H_{t-1}$ refers to the hidden state value at time point t-1.

Therefore, the temporal effect gate module TEG trained as above may acquire the temporal effect analysis data E according to the predetermined time-series pattern decomposition data P and hidden state matrix data H based on Equation 3.

In other words, the temporal effect gate module TEG may acquire the temporal effect analysis data E, which analyzes the degree of effect between the predetermined time series pattern decomposition data P as shown in FIG. 5 and the predetermined hidden state matrix data H as shown in FIG. 6, based on Equation 3.

Also, the temporal effect gate module TEG may provide the acquired temporal relation analysis data R as output data.

Meanwhile, the temporal relation-effect layer module TREL including the modules as described above in the embodiment may update the hidden state data.

In detail, in an embodiment, the temporal relation-effect layer module TREL may repeatedly perform functional operations based on the aforementioned modules (i.e., the temporal decomposition gate module TDG, the temporal relation gate module TRG and the temporal effect gate module TEG) based on the time-series data up to the time point t (T > 1).

In the process, the temporal relation-effect layer module TREL may perform updating on the hidden state data.

In more detail, the temporal relation-effect layer module TREL may update the hidden state data at time point t through pattern learning based on the hidden state data at time point t-1 and the input data at time point t.

In addition, the temporal relation-effect layer module TREL may update the hidden state data at time point t+1 through pattern learning based on the hidden state data at time point t and input data at time point t+1.

Here, the hidden state data at time point t may be data in which information according to the input data at time point t-1 and the input data at time point t are learned together.

That is, in an embodiment, the temporal relation-effect layer module TREL may implement hidden state data updating according to the input data from the predetermined time point t to time point T-1 by updating the hidden state data up to time point T through repetition of the aforementioned functional operation.

Here, in an embodiment, the temporal relation-effect layer module TREL may perform hidden state data update according to [Equation 4] below.

[Equation 4]

$$H_t = W_I I_t + softmax(W_{IH} I_t + W_{HH} H_{t-1}) \odot tanh(W_{IH} I_t + W_{HH} H_{t-1})$$

Here, the parameter $H_t$ may update $H_t$ by multiplying the value that has learned the relation $\alpha$ between the decomposed time-series pattern at time point t and the hidden state at time point t-1 using Equation 2 and the effect P between the decomposed time-series pattern at time point t and the hidden state at time point t-1, and adding a resultant value to the input decomposed input time-series data in the current state.

Returning again, in an embodiment, the temporal relation-effect layer module TREL may perform time-series prediction deep learning using the predetermined first time point time-series data D1 as input data and the predetermined second time point time-series data D2 predicted based on the input first time point time-series data D1 as output data.

As described above, in an embodiment, the temporal relation-effect layer module TREL may be implemented in a structure that automatically learns the relation and effect between the temporal factors included in the predetermined time-series data at the deep learning neural network layer level.

Also, the temporal relation-effect layer module TREL may perform time-series prediction deep learning based on the structure (i.e., the deep learning layer structure including the temporal decomposition gate module TDG, the temporal relation gate module TRG, and the temporal effect gate module TEG.

Therefore, the temporal relation-effect layer module TREL may perform time-series prediction deep learning based on the time-series data with high accuracy by considering all the numerous potential factors that may exist in the time-series data, regardless of the form of the potential factors.

In other words, when time-series data that changes over time is in a plurality of heterogeneous data formats, the temporal relation-effect layer module TREL trained with time-series data in a first data format may output time-series prediction data for time-series data in a second data format even in the case of input based on the time-series data in the second data format.

- Method of providing time-series prediction deep learning neural network

Hereinafter, a method for providing a time-series prediction deep learning neural network (i.e., a method for providing a time-series prediction service) by the application 111 according to an embodiment of the present disclosure will be described in detail with reference to the accompanying drawings.

In an embodiment of the present disclosure, at least one processor of the terminal 100 may execute at least one application 111 stored in at least one memory 110 or operate the at least one application 111 in a background state.

Hereinafter, the operation of at least one processor of the terminal 100 to execute instructions of the application 111 to perform a method for providing a time-series prediction service will be briefly described as being performed by the application 111.

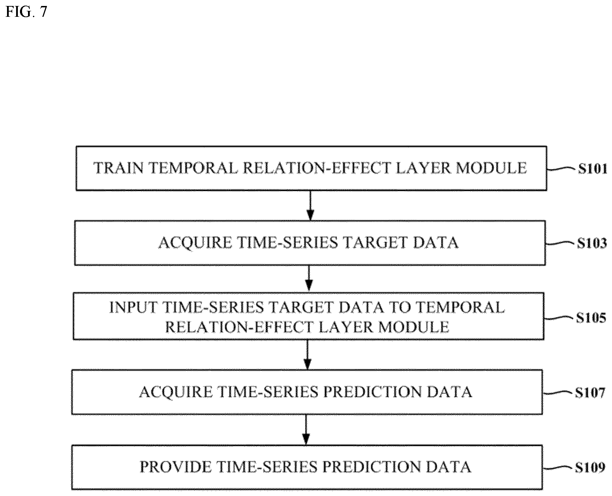

FIG. 7 is a flowchart illustrating a method for providing a time-series prediction deep learning neural network according to an embodiment of the present disclosure.

Referring to FIG. 7, in an embodiment, the application 111 executed by at least one processor of the terminal 100 or operating in the background may train the temporal relation-effect layer module TREL (S101).

In detail, in an embodiment, the application 111 may train the temporal relation-effect layer module TREL according to an embodiment of the present disclosure.

Here, in other words, the temporal relation-effect layer module TREL according to an embodiment may be a deep learning module that uses the predetermined first time point time-series data D1 as input data and the predetermined second time point time-series data D2 predicted based on the input first time point time-series data D1 as output data.

In more detail, in an embodiment, the application 111 may train the temporal decomposition gate module TDG of the temporal relation-effect layer module TREL based on a training data set including a plurality of time-series data and time series pattern decomposition data P respectively corresponding to the time-series data.

Here, in an embodiment, the application 111 may perform temporal decomposition gate module TDG learning based on the aforementioned Equation 1.

In addition, in an embodiment, the application 111 may train the temporal relation gate module TRG of the temporal relation-effect layer module TREL based on a training data set including a plurality of time-series pattern decomposition data P and hidden state matrix data H.

Here, in an embodiment, the application 111 may perform temporal relation gate module TRG learning based on the aforementioned Equation 2.

In addition, in an embodiment, the application 111 may train the temporal effect gate module TEG of the temporal relation-effect layer module TREL based on the training data set including a plurality of time-series pattern decomposition data P and the hidden state matrix data H.

Here, in an embodiment, the application 111 may train the temporal effect gate module TEG based on the aforementioned Equation 3.

Thus, in an embodiment, application 111 may train the temporal relation-effect layer module TREL.

In addition, in an embodiment, the application 111 may acquire time-series target data (S103).

Here, the time-series target data according to an embodiment may refer to time-series data to be input to the temporal relation-effect layer module TREL (i.e., the predetermined first time point time-series data D1 on which time-series prediction is to be performed through the temporal relation-effect layer module TREL.

Here, for reference, the time-series data may be a set of sequential data sets collected at specific time intervals over a predetermined period of time.

Such time-series data may be featured in that a data order is specified according to the passage of time and that there is a correlation between consecutive data.

In detail, in an embodiment, the application 111 may acquire time-series target data as described above based on linkage with an external server and/or user input.

In addition, in an embodiment, the application 111 may input the acquired time-series target data into the temporal relation-effect layer module TREL (S105).

That is, in an embodiment, the application 111 may input the time-series target data acquired as above as input data to the learned temporal relation-effect layer module TREL as described above.

In addition, in an embodiment, the application 111 may acquire time-series prediction data (S107).

Here, the time-series prediction data according to an embodiment may refer to the output data of the temporal relation-effect layer module TREL that receives the time-series target data (i.e., the predetermined second time point time-series data D2 acquired through time-series prediction deep learning based on the temporal relation-effect layer module TREL.

In detail, in an embodiment, the application 111 may acquire time-series prediction data by interworking with the temporal relation-effect layer module TREL that inputs time-series target data.

More specifically, in an embodiment, the temporal relation-effect layer module TREL, which receives the time-series target data, may perform functional operations based on the temporal decomposition gate module TDG, the temporal relation gate module TRG, and the temporal effect gate module TEG described above based on the input time-series target data.

In other words, the temporal relation-effect layer module TREL may perform time-series prediction deep learning based on the time-series target data by interworking with the temporal decomposition gate module TDG, the temporal relation gate module TRG, and the temporal effect gate module TEG.

In more detail, the temporal relation-effect layer module TREL may acquire the time-series pattern decomposition data P according to time-series target data by interworking with the temporal decomposition gate module TDG.

In addition, the temporal relation-effect layer module TREL may acquire the temporal relation analysis data R based on the time-series pattern decomposition data P and the hidden state matrix data H according to the time-series target by interworking with the temporal relation gate module TRG.

In addition, the temporal relation-effect layer module TREL may acquire temporal effect analysis data E based on the time-series pattern decomposition data P and the hidden state matrix data H according to the time-series target data by interworking with the temporal effect gate module TEG.

Here, the temporal relation-effect layer module TREL may perform update on the hidden state matrix data H based on the acquired data.

In addition, the temporal relation-effect layer module TREL may acquire time-series prediction data based on the acquired data (i.e., the time-series pattern decomposition data P, the temporal relation analysis data R, and the temporal impact analysis data (E).

That is, the temporal relation-effect layer module TREL may acquire the time-series prediction data (i.e., the second time point time-series data D2) according to the time series target data based on the time-series pattern decomposition data P, the temporal relation analysis data R, and the temporal effect analysis data E acquired based on the time series target data (i.e., the first time point time-series data D1).

Also, the temporal relation-effect layer module TREL may provide the acquired time-series prediction data to the application 111.

Thus, in an embodiment, the application 111 may acquire the time-series prediction data according to the time-series target data from the temporal relation-effect layer module TREL that inputs the time-series target data.

In addition, in an embodiment, the application 111 may provide the acquired time-series prediction data (S109).

That is, in an embodiment, the application 111 may provide the time-series prediction data acquired as above according to a predetermined method.

In an embodiment, the application 111 may provide the time-series prediction data through a predetermined application service (e.g., a speech recognition service and/or an automatic transaction service, etc.) based on time-series prediction data.

In the present embodiment, the application 111 may provide the time-series prediction data acquired using the temporal relation-effect layer module TREL according to an embodiment of the present disclosure by combining the time-series prediction data with various processes.

In other words, the application 111 may acquire high quality time-series prediction data according to the time-series target data regardless of the form of the time-series target data by interworking with the temporal relation-effect layer module TREL, and support a variety of application services using the acquired high-quality time-series prediction data.

Therefore, the application 111 may effectively improve the efficiency and performance of various service processes based on the predetermined time-series data.

As above, in the method and system for providing a time-series prediction deep learning neural network according to an embodiment of the present disclosure, the deep learning neural network that improves deep learning prediction performance based on time-series data based on learning according to a temporal relation and a temporal effect may be provided, so that time-series prediction deep learning based on time-series data by considering all the numerous potential factors that may exist in the time-series data, regardless of the form, may be performed with high accuracy.

In addition, in the method and system for providing a time-series prediction deep learning neural network according to an embodiment of the present disclosure, the deep learning neural network having a structure of self-learning the relation and effect between temporal factors included in predetermined time-series data at the deep learning neural network layer level is provided, so that the performance and quality of various application services that utilize resulting data by implementing time-series predictive deep learning with high accuracy (recognition rate) may be improved.

Hereinafter, a service including a module for recognizing infant and adult voices will be described as an application service using the method for providing the time-series prediction deep learning neural network. In other words, when adult voices and infant voices are used as time-series target data, they have different voice forms, and a method for learning and analyzing adult voices and infant voices with these heterogeneous differences using a single time-series prediction deep learning neural network is described.

- Temporal Relation-Effect Seq2Seq Layer Module TSSL

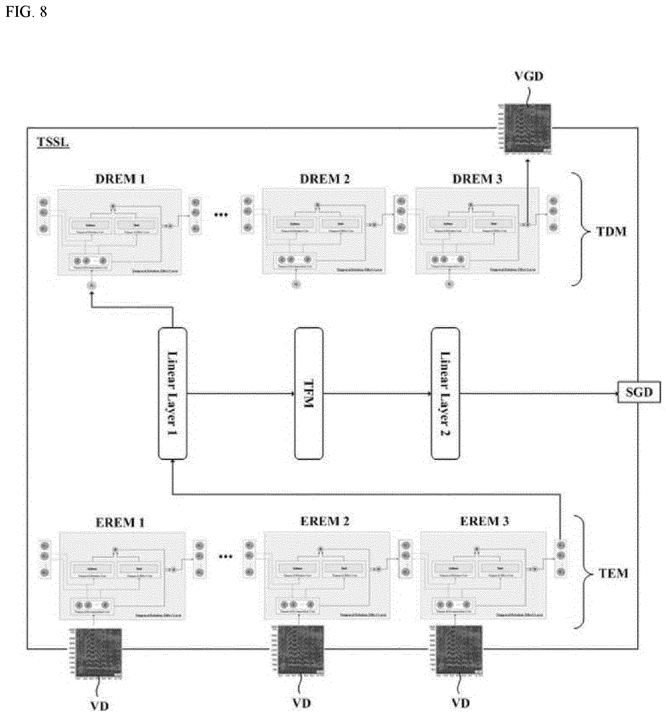

FIG. 8 is a conceptual diagram illustrating a temporal relation-effect sequence-to-sequence layer module TSSL according to an embodiment of the present disclosure.

Referring to FIG. 8, the temporal relation-effect sequence-to-sequence layer module TSSL according to an embodiment of the present disclosure may be a deep learning module using predetermined voice data (VD: in an embodiment, infant voice data VD) as input data and predetermined service generation data SGD according to the input voice data VD as output data.

Here, the voice data according to an embodiment includes a plurality of audio frequency data that changes over time, so the voice data may have the form of time-series data.

Here, service generation data SGD according to an embodiment may refer to data generated as a specific task based on the predetermined voice data VD, that is, a task specialized for the service, by using a temporal relation-effect sequence-to-sequence layer module TSSL in the process of a predetermined service (in an embodiment, an infant education platform providing service) process.

In an embodiment, in the case of the infant education platform providing service, the corresponding service process may perform infant speech recognition based on the temporal relation-effect sequence-to-sequence layer module TSSL.

Here, the corresponding service process may acquire query data according to specific infant voice data VD during the infant speech recognition process.

Also, the corresponding service process may generate answer data according to the acquired query data.

Accordingly, the corresponding service process may provide service generation data SGD (here, answer data) according to the predetermined voice data VD (here, the specific infant voice data VD).

Referring further to FIG. 8, in an embodiment, the temporal relation-effect sequence-to-sequence layer module TSSL may include a temporal encoder module TEM, a first linear layer (Linear Layer 1), a temporal decoder module TDM, a transformer module TFM, and a second linear layer (Linear Layer 2).

Here, in FIG. 8, in order to prevent the features according to an embodiment of the present disclosure from being blurred, the temporal relation-effect sequence-to-sequence layer module TSSL is described as including the components as described above.

However, according to an embodiment, a person skilled in the art may understand that other general-purpose components other than those shown in FIG. 8 may be included or some components shown in FIG. 8 may be omitted.

In detail, the temporal encoder module TEM according to an embodiment may be an encoding module including N (N>1) temporal relation-effect layer modules TREL.

Here, in an embodiment, the temporal encoder module TEM may include a set number (here, N) of temporal relation-effect layer modules TREL according to user input and/or a preset process algorithm.

Here, each temporal relation-effect layer module TREL (hereinafter, encoder relation-effect module EREM) included in the temporal encoder module TEM may be a deep learning module using predetermined infant voice data VD as input data and latent variable data z learned from the input infant voice data VD as output data, as a time-series prediction deep learning neural network of FIG. 3.

That is, the temporal encoder module TEM may be configured to include a plurality of layers of temporal relation-effect layer module TREL.

In addition, the first linear layer according to an embodiment may be a deep learning layer using the output data (i.e., the latent variable data z) of the encoder relation-effect module EREM as input data and data obtained by transforming a dimension of the input latent variable data z into input data format of the temporal decode module TDM and/or the transformer module TFM, as output data.

In an embodiment, the first linear layer may be a layer that outputs variable dimension transformation data generated by performing a linear operation based on the latent variable data z.

In addition, the temporal decoder module TDM according to an embodiment may be a decoding module including M (M>1) temporal relation-effect layer modules TREL.

Here, in an embodiment, the temporal encoder module TEM may include a set number (here, M) of temporal relation-effect layer modules TREL according to user input and/or a preset process algorithm.

Here, each temporal relation-effect layer module TREL (DREM: hereinafter, decoder relation-effect module) included in the temporal decoder module TDM may be a deep learning module using the output data (i.e., the variable dimension transformation data) of the first linear layer as input data and infant voice generation data VGD predicted based on the input variable dimension transformation data as output data, as the time-series prediction deep learning neural network of FIG. 3.

That is, the temporal decoder module TDM may be configured to include a plurality of layers of temporal relation-effect layer module TREL.

Also, the infant voice generation data VGD according to an embodiment may refer to result data acquired by the decoder relation-effect module (DREM) performing time-series deep learning based on the variable dimension transformation data.

Here, in an embodiment, the infant voice generation data VGD may include generation value data for generating the infant voice data VD input to the temporal encoder module TEM.

Accordingly, in an embodiment, the temporal relation-effect sequence-to-sequence layer module TSSL may be trained such that the infant answer data VD, which is the initial input data (i.e., the input data to the temporal encoder module TEM), and the output data (i.e., the infant voice generation data VGD) of the temporal decoder module TDM based on the data VD become similar to each other.

Therefore, the temporal relation-effect sequence-to-sequence layer module TSSL may implement a deep learning neural network structure that improves the accuracy (recognition rate) of the speech recognition process based on the predetermined infant voice data VD.

In addition, the transformer module TFM according to an embodiment may be a deep learning module using the output data (i.e., the variable dimension transformation data) of the first linear layer as input data and predetermined task data according to the input variable dimension transformation data as output data.

Here, the task data according to an embodiment may refer to data resulting from performing a task specialized for the corresponding service in a service (in an embodiment, the infant education platform providing service) process based on the predetermined voice data VD.

For example, in the case of the infant education platform providing service, the task data may include answer data to query data based on the infant voice data VD.

Meanwhile, for reference, the transformer module TFM may be a module including a deep learning neural network that may learn context and meaning by tracking the relation between elements in a predetermined time-series (sequential) data (e.g., word data in a sentence, etc.).

The transformer module TFM may refer to a deep learning module implemented only with attention or self-attention, while following the encoder and decoder of the sequence-to-sequence structure.

In detail, in an embodiment, the temporal relation-effect sequence-to-sequence layer module TSSL may be trained such that the infant answer data VD as initial input data (i.e., the input data to the temporal encoder module TEM) and the output data (i.e., the infant voice generation data VGD) of the temporal decoder module TDM based on the infant voice data VD have a similarity equal to or greater than a predetermined value.

Thereafter, in an embodiment, the temporal relation-effect sequence-to-sequence layer module TSSL, which has been sufficiently trained to have a similarity equal to or greater than the predetermined value, may input predetermined infant voice target data to the temporal encoder module TEM.

In addition, in an embodiment, the temporal relation-effect sequence-to-sequence layer module TSSL may acquire the latent variable data z (hereinafter, latent variable target data) according to the infant voice target data by interworking with the temporal encoder module TEM that receives infant speech target data.

In addition, in an embodiment, the temporal relation-effect sequence-to-sequence layer module TSSL may input the acquired latent variable target data to the first linear layer.

In addition, in an embodiment, the temporal relation-effect sequence-to-sequence layer module TSSL may acquire variable dimension transformation data (hereinafter, variable dimension transformation target data) according to the latent variable target data by interworking with the first linear layer that receives the latent variable target data.

In addition, in an embodiment, the temporal relation-effect sequence-to-sequence layer module TSSL may input the acquired variable dimension transformation target data to the transformer module TFM.

Then, the transformer module TFM that has received the latent variable target data may generate task data (hereinafter, referred to as task target data) according to the input latent variable target data.

To this end, in an embodiment, the transformer module TFM may be trained in advance based on a predetermined training data set including a plurality of latent variable data z and task data respectively corresponding to the plurality of latent variable data z.

Accordingly, the temporal relation-effect sequence-to-sequence layer module TSSL may acquire the task target data according to the variable dimension transformation target data by interworking with the transformer module TFM.

Here, according to an embodiment, the temporal relation-effect sequence-to-sequence layer module TSSL may additionally train the transformer module TFM based on the training data set that further includes the variable dimension transformation target data and the task target data.

As such, in an embodiment, the temporal relation-effect sequence-to-sequence layer module TSSL may implement various task processing for various speech recognition-based services through the transformer module TFM, and here, the accuracy (recognition rate) of the speech recognition task processing may be significantly improved by utilizing the temporal relation-effect layer module TREL described above.

In addition, the second linear layer according to an embodiment may be a deep learning layer using the output data (i.e., the task data) of the transformer module TFM as input data and the data (i.e., the service generation data SGD) obtained by transforming the dimension of the input task data into an output data format (i.e., the service generation data (SGD) format) of the temporal relation-effect sequence-to-sequence layer module TSSL.

In an embodiment, the second linear layer may be a layer that outputs service generation data SGD generated by performing a linear operation based on the task data.

In the embodiment as above, the temporal relation-effect sequence-to-sequence layer module TSSL may recognize the predetermined voice data VD (in an embodiment, the infant voice data VD) by using an encoder, a decoder, and a transformer based on the temporal relation-effect layer module TREL and further improve the performance and usability of various services (in an embodiment, the infant education platform providing service) based on speech recognition by improving the service generation data SGD (in an embodiment the answer data, etc.) acquired accordingly.

- Method of implementing infant education platform providing service based on time-series prediction deep learning neural network

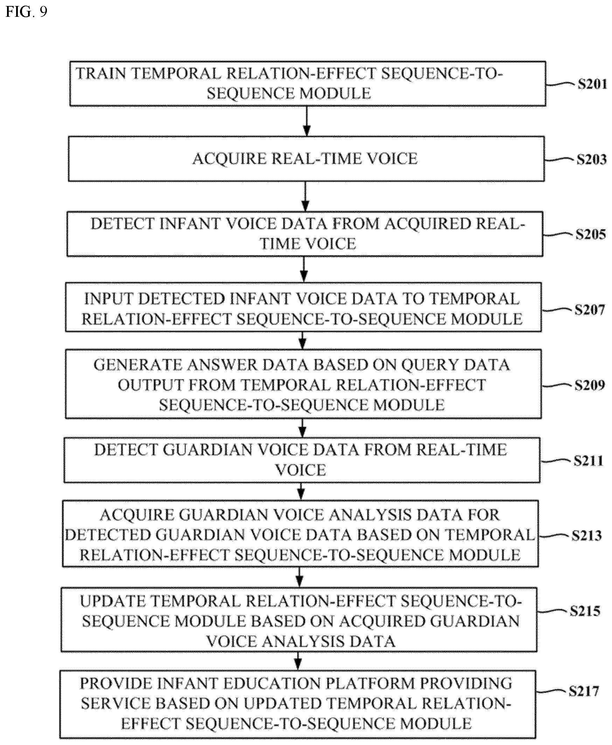

Hereinafter, a method of implementing an infant education platform providing service based on the time-series prediction deep learning neural network including the temporal relation-effect layer module TREL by the application 111 executed by at least one processor of the terminal 100 according to an embodiment of the present disclosure will be described in detail with reference to the attached FIG. 9.

In an embodiment of the present disclosure, at least one processor of the terminal 100 may enable at least one application 111 stored in at least one memory 110 to execute or operate in a background state.

Hereinafter, the method for implementing the aforementioned infant education platform providing service by operating the at least one processor to execute instructions of the application 111 will be briefly described as being performed by the application 111.

FIG. 9 is a flowchart illustrating a method for implementing an infant education platform providing service according to an embodiment of the present disclosure.

Referring to FIG. 9, in an embodiment, the application 111 may train the temporal relation-effect sequence-to-sequence layer module TSSL (S201).

In detail, in an embodiment, the application 111 may train the temporal relation-effect sequence-to-sequence layer module TSSL including N (N>1) temporal relation-effect layer modules TREL.

Here, the temporal relation-effect sequence-to-sequence layer module TSSL according to an embodiment may be a deep learning module using predetermined voice data (in an embodiment, the infant voice data VD) as input data and predetermined service generation data SGD (in an embodiment, query data and/or answer data) according to the input voice data VD as output data.

In more detail, referring back to FIG. 3, in an embodiment, the application 111 may train the temporal decomposition gate module TDG of the temporal relation-effect sequence-to-sequence layer module TSSL based on the training data set established based on a plurality of time-series data according to the infant voice data VD and the time-series pattern decomposition data p respectively corresponding to the time-series data.

Here, in an embodiment, the application 111 may perform temporal decomposition gate module TDG learning based on the aforementioned Equation 1.

In addition, in an embodiment, the application 111 may train the temporal relation gate module TRG of the temporal relation-effect sequence-to-sequence layer module TSSL based on the training data set including the plurality of time-series pattern decomposition data p according to the infant voice data VD and the hidden state matrix data H.

Here, in an embodiment, the application 111 may train the temporal relation gate module TRG based on the aforementioned Equation 2.

In addition, in an embodiment, the application 111 may train the temporal effect gate module TEG of the temporal relation-effect sequence-to-sequence layer module TSSL based on the training data set including the plurality of time-series pattern decomposition data P according to the infant voice data VD and the hidden state matrix data H.

Here, in an embodiment, the application 111 may train the temporal effect gate module TEG based on the aforementioned Equation 3.

Thus, in an embodiment, the application 111 may train the temporal relation-effect sequence-to-sequence layer module TSSL according to an embodiment of the present disclosure.

In addition, in an embodiment, the application 111 may train the transformer module TFM of the temporal relation-effect sequence-to-sequence layer module TSSL based on the predetermined training data set including a plurality of latent variable data z and the task data corresponding to the plurality of latent variable data z.

Therefore, in an embodiment, the application 111 may train so that the predetermined voice data VD (in an embodiment, the infant voice data VD) as input data and the predetermined service generation data SGD according to the input voice data VD as output data.

That is, in an embodiment, after performing feature learning by automatically analyzing differences between adult voices and infant voices based on the finally learned temporal encoder module TEM, the first linear layer (Linear Layer 1), the temporal decoder module TDM, the transformer module TFM and/or the second linear layer (Linear Layer 2), the temporal relation-effect sequence-to-sequence layer module TSSL may recognize the predetermined infant voice data VD input to the temporal relation-effect sequence-to-sequence layer module TSSL with high accuracy.

Returning again, in an embodiment, the application 111 may acquire real-time voice (S203).

In detail, in an embodiment, the application 111 may acquire real-time voice based on a predetermined user interface implemented in the infant education platform providing service.

Here, the real-time voice according to an embodiment may be voice data including the voice of at least one of a child and/or the child's guardian using the infant education platform providing service.

In addition, in an embodiment, the application 111 may detect infant voice data VD from the acquired real-time voice (S205).

In detail, in an embodiment, the application 111 may detect the infant voice data VD from a real-time voice file based on a deep learning model using speaker separation and/or speaker segmentation techniques.

For example, the application 111 may utilize Bottom-up Approach and Top-Down Approach technologies as a method for training a deep learning model using a speaker separation and/or speaker segmentation technology. That is, based on the deep learning model, at least one infant voice data VD may be detected from the real-time voice spoken by at least one speaker.

Here, when a plurality of voice data is detected, in an embodiment, the application 111 may determine the infant voice data VD corresponding to a preset pronunciation and/or frequency range. Hereinafter, the description will be given based on that t there is only one determined infant voice data VD.

For example, the preset frequency range for determining the infant voice data VD may be 270 to 500 Hz, which is a fundamental frequency when infants utter.

In addition, in an embodiment, the application 111 may transfer the detected infant voice data VD into a text file.

In addition, in an embodiment, the application 111 may vectorize the infant voice data VD transformed into text.

In addition, in an embodiment, the application 111 may input the detected infant voice data VD into the trained temporal relation-effect sequence-to-sequence layer module TSSL (S207).

Here, in an embodiment, the temporal relation-effect sequence-to-sequence layer module TSSL may be a deep learning neural network which may perform feature learning on a plurality of infant voice data VD and combine the transformer module TFM to the learned infant voice features to recognize the input infant voice data VD with a high recognition rate.

In more detail, the temporal relation-effect sequence-to-sequence layer module TSSL may recognize the input infant voice data VD with a high recognition rate by interworking with the temporal decomposition gate module TDG, the temporal relation gate module TRG, and the temporal effect gate module TEG.

In addition, in an embodiment, the trained temporal relation-effect sequence-to-sequence layer module TSSL may analyze questions, contents, and/or emotions included in the input infant voice data VD.

Hereinafter, data that analyzes questions, contents, and/or emotions included in the infant voice data VD may be referred to as query data.

That is, in an embodiment, the temporal relation-effect sequence-to-sequence layer module TSSL may output query data obtained by analyzing the input infant voice data VD.

In addition, in an embodiment, the temporal relation-effect sequence-to-sequence layer module TSSL may output corresponding answer data based on the output query data.

That is, in an embodiment, the application 111 may generate answer data based on the query data output from the temporal relation-effect sequence-to-sequence layer module TSSL (S209).

Here, the answer data according to an embodiment may be data that includes an answer corresponding to the question, contents, and/or emotion included in the query data.

In other words, in an embodiment, the application 111 may acquire answer data output based on the temporal relation-effect sequence-to-sequence layer module TSSL for the query data.

For example, assuming that the query data output through a series of processes includes the contents "What color is an apple?", the answer data generated based on the corresponding data may be "It is red or green."

Here, although the answer data according to an embodiment is output from the temporal relation-effect sequence-to-sequence layer module TSSL, in another embodiment, the application 111 may extract answer data from a data set in which the query data and the answer data are already matched, thereby generating the answer data.

In an embodiment, the application 111 may provide the answer data in the form of text, audio, and/or image to the terminal 100.

In addition, in an embodiment, the application 111 may detect guardian voice data from the real-time voice (S211).

Here, the guardian voice data may be data that has pronounced the same contents as that the infant wants to say, as an adult voice. In other words, the guardian is based on being an adult.

Here, the method for detecting the guardian voice data is the same as the method for detecting the infant voice data VD in operation S205 described above, so the corresponding contents are omitted.

The reason for detecting the guardian voice data is that adult voices are delivered with more accurate pronunciation and vocalization than infant voices, so the speech recognition rate is higher, and thus, the guardian voice data may be used to verify the contents of infant voice data VD.

In addition, in an embodiment, the application 111 may input the guardian voice data into the temporal relation-effect sequence-to-sequence layer module TSSL.

Accordingly, in an embodiment, the application 111 may acquire guardian voice analysis data output from the temporal relation-effect sequence-to-sequence layer module TSSL using the detected guardian voice data as input data (S213).

Here, the guardian voice analysis data according to an embodiment may be data including questions, contents, and/or emotions included in the guardian voice data.

Here, the query data and the guardian voice analysis data may be different. This is because the pronunciations of an infant and an adult may be different from each other in pronouncing the same word. Here, in an embodiment, for convenience of description, it is assumed that the guardian voice analysis data (i.e., the adult's pronunciation) is unconditionally correct.

In addition, in an embodiment, the application 111 may fine-tune predetermined a predetermined parameter included in the query data based on the acquired guardian voice analysis data or change the entire query data into guardian voice analysis data. Hereinafter, for convenience of description, the description will be based on the query data being changed to guardian voice analysis data.

To this end, in an embodiment, the application 111 may compare the query data and/or the guardian voice analysis data.

Here, in an embodiment, if the contents included in the query data and/or the guardian voice analysis data match, the application 111 may skip operation S215 and perform operation S217.

However, in an embodiment, the application 111 may change the query data into guardian voice analysis data if the contents included in the query data and/or guardian voice analysis data is inconsistent.

For example, the application 111 may change a word 'eum' included in the query data to a word 'name' included in the guardian voice analysis data.

In addition, in an embodiment, the application 111 may generate second answer data for the guardian voice analysis data.

That is, as the query data is changed to the guardian voice analysis data, first answer data corresponding to the query data and second answer data corresponding to the guardian voice analysis data may be different, so the second answer data may be newly generated.

Accordingly, even if the query data is incorrectly analyzed and contents with a different meaning are output, the incorrectly analyzed voice analysis result may be correctly modified to correspond to the guardian voice analysis data, thereby increasing the accuracy of the infant speech recognition of the temporal relation-effect sequence-to-sequence layer module TSSL.

In addition, in an embodiment, the application 111 may update the temporal relation-effect sequence-to-sequence layer module TSSL based on the acquired guardian voice analysis data (S215).

To update the temporal relation-effect sequence-to-sequence layer module TSSL, in an embodiment, the application 111 may re-input the infant voice data VD and the second answer data to the temporal relation-effect sequence-to-sequence layer module TSSL.

Accordingly, the temporal relation-effect sequence-to-sequence layer module TSSL may be retrained to output the second answer data when it receives the corresponding infant voice data VD.

In another embodiment, the application 111 may update the temporal relation-effects sequence-to-sequence layer module TSSL by fine-tuning parameters of the temporal relation-effects sequence-to-sequence layer module TSSL.

In addition, in an embodiment, the application 111 may provide an infant education platform providing service based on the updated temporal relation-effect sequence-to-sequence layer module TSSL (S217).

Here, the infant education platform providing service according to an embodiment may be a service providing a response in text and/or audio when a user (more specifically, an infant) inputs a predetermined voice into the audio sensor 165 of the terminal 100, or providing a program matched to the input voice. In addition, the infant education platform providing service may include an education program that acquires scores by receiving a user's voice for predetermined learning materials and content provided on a display.

To this end, the answer data according to an embodiment may include a command instructing execution of a predetermined infant education program. That is, in an embodiment, the application 111 may previously set a predetermined infant education program for each word detected in the answer data.

For example, if the user inputs a voice saying "I want to play Hangul," the application 111 may execute a Hangul play program according to the command to run the Hangul play program already matched to the word 'Hangul play' and provides the corresponding program to the user.

In an embodiment, the infant education platform providing service may basically proceed with a predetermined process based on the infant's voice.

Here, the infant education platform providing service may be used by infants alone and/or by infants and guardians together. However, as described above, the accuracy of the answer data may be improved depending on the voice data of the guardian, so simultaneous use by infants and guardians may be recommended.

The embodiment of the present disclosure described above may be implemented as computer commands which may be executed through various computer components and recorded in a computer-readable recording medium. The computer-readable recording medium may include program instructions, data files, data structures or a combination thereof. Program instructions recorded on the computer-readable recording medium may be particularly designed and structured for the present disclosure or available to those skilled in computer software. Examples of the computer-readable recording medium include hardware devices particularly configured to store and perform program instructions, such as magnetic mediums, such as a hard disk, a floppy disk, and a magnetic tape; optical mediums, such as a compact disk-read only memory (CD-ROM) and a digital versatile disc (DVD); magneto-optical mediums, such as floptical disks; a read-only memory (ROM); a random access memory (RAM); and a flash memory. The program instructions may include, for example, a high-level language code that may be executed by a computer using an interpreter, as well as a machine language code made by a complier. The hardware device described herein may be changed to one or more software modules to perform processing according to the present disclosure, and vice versa.

The specific executions described in the present disclosure are embodiments and do not limit the scope of the present disclosure by any method. For simplicity of the specification, electronic components, control systems, software, and other functional factors in the related art may be omitted. In addition, connection of lines or connection members between the components in the drawings illustrate functional connection and/or physical or circuital connection as example, and thus in a real apparatus, replaceable or additional diverse functional connection, physical connection or circuital connection may be provided. Also, they may not necessarily be essential components for application of the present disclosure unless specifically mentioned, such as by "essential" or "importantly".

Although embodiments have been described with reference to a number of illustrative embodiments thereof, it should be understood that numerous other modifications and embodiments may be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims.

**Claims**

1. A method for providing time-series prediction deep learning neural network by a time-series prediction application run by at least one processor of a terminal, the method comprising:

   training a temporal relation-effect layer module;
   inputting first time point time-series data into the temporal relation-effect layer module;
   acquiring second time point time-series data according to the first time point time-series data from the temporal relation-effect layer module; and
   providing the second time point time-series data,
   wherein the temporal relation-effect layer module includes a temporal decomposition gate module, a temporal relation gate module, and a temporal effect gate module.

2. The method of claim 1, wherein the temporal decomposition gate module is a deep learning module using the first time point time-series data as input data and time-series pattern decomposition data, which is data obtained by decomposing the first time point time-series data into a plurality of different time-series patterns through a variational mode decomposition, as output data.

3. The method of claim 1, wherein the training of the temporal relation-effect layer module includes training the temporal decomposition gate module based on a training data set including a plurality of time-series data and time-series pattern decomposition data respectively corresponding to the plurality of time-series data.

4. The method of claim 1, wherein the temporal relation gate module is a deep learning module using hidden state matrix data including k (k>0) hidden state data and the time-series pattern decomposition data as input data and temporal relation analysis data, which is data obtained by analyzing multivariable temporal relation between the hidden state matrix data and the time-series pattern decomposition data, as output data.

5. The method of claim 4, wherein the training of the temporal relation-effect layer module includes training the temporal relation gate module based on a training data set including a plurality of hidden state matrix data and a plurality of time-series pattern decomposition data.

6. The method of claim 1, wherein the temporal effect gate module is a deep learning module using the hidden state matrix data including k (k>0) hidden state data and the time-series pattern decomposition data as input data and temporal effect analysis data, which is data obtained by analyzing a multivariable temporal effect between the hidden state matrix data and the time-series pattern decomposition data, as output data.

7. The method of any one of claim 5 or claim 6, wherein the training of the temporal relation-effect layer module includes training the temporal effect gate module based on a training data set including a plurality of hidden state matrix data and a plurality of time-series pattern decomposition data.

8. The method of any one of claim 4 or claim 6, wherein the hidden state data is data learned by accumulating past information of the first time point time-series data based on a predetermined time point.

9. The method of claim 8, wherein
the acquiring of the second time point time-series data includes:

updating hidden state data at a predetermined time point t through pattern learning based on input data at the time point t and hidden state data at a time point t-1; and
updating hidden state data at a time point t+1 through pattern learning based on input data at the time point t+1 and the hidden state data at the time point t.

10. The method of claim 1, wherein the acquiring of the second time point time-series data includes acquiring the second time point time-series data based on time-series pattern decomposition data which is output data of the temporal decomposition gate module, temporal relation analysis data which is output data of the temporal relation gate module, and temporal effect analysis data which is output data of the temporal effect gate module.

11. The method of claim 1, wherein the providing of the second time point time-series data includes providing the second time point time-series data based on a predetermined application service.

12. A system for providing time-series prediction deep learning neural network, the system comprising:

at least one memory in which a time-series prediction application is stored; and
at least one processor configured to read the time-series prediction application stored in the memory and provide a time-series prediction deep learning neural network,
wherein an instruction of the time-series prediction application includes an instruction performing
training a temporal relation-effect layer module,
inputting first time point time-series data into the temporal relation-effect layer module,
acquiring second time point time-series data according to the first time point time-series data from the temporal relation-effect layer module, and
providing the second time point time-series data,
wherein the temporal relation-effect layer module includes a temporal decomposition gate module, a temporal relation gate module, and a temporal effect gate module.

13. A method for recognizing infants' voice based on a time-series prediction deep learning neural network, as a method for providing an infant education platform providing service by an infant education application run by at least one processor of a terminal, the method comprising:

training a temporal relation-effect sequence-to-sequence layer module;
acquiring real-time voice;
detecting infant voice data from the acquired real-time voice;
inputting the detected infant voice data into the trained temporal relation-effect sequence-to-sequence layer module;
generating answer data based on query data output from the temporal relation-effect sequence-to-sequence layer module; and
providing the infant education platform providing service based on the generated answer data.

14. The method of claim 13, wherein the temporal relation-effect sequence-to-sequence layer module includes a temporal encoder module, which is an encoding module including a plurality of temporal relation-effect layer modules, and a temporal decoder module, which is a decoding module including a plurality of temporal relation-effect layer modules.

15. The method of claim 14, wherein the temporal relation-effect layer module includes a temporal decomposition gate module, a temporal relation gate module, and a temporal effect gate module.

FIG. 1

**1000**

FIG. 2

DISPLAY SYSTEM **170**

DISPLAY

**171**

TOUCH SENSOR

**173**

INTERFACE UNIT

**140**

INPUT SYSTEM

**150**

PROCESSOR ASSEMBLY

**120**

MEMORY **110**

APPLICATION

**111**

COMMUNICATION PROCESSOR

**130**

SENSOR SYSTEM **160**

IMAGE SENSOR

**161**

IMU

**163**

AUDIO SENSOR

**165**

TERMINAL **100**

EP 4 517 598 A1

FIG. 3

24

FIG. 4

[Example 1]

[Example 2]

[Example 3]

[Example 4]

FIG. 5

**Output value of TDG at time t**

| $V_{11}$ | $V_{12}$ | ... | $V_{1k}$ |
|---|---|---|---|
| ⋮ | ⋮ | ⋱ | ⋮ |
| $V_{j1}$ | $V_{j2}$ | ... | $V_{jk}$ |

**j*k matrix**

FIG. 6

**Value of hidden state at time t-1**

| $H_{11}$ | $H_{12}$ | ... | $H_{1n}$ |
|---|---|---|---|
| ⋮ | ⋮ | ⋱ | ⋮ |
| $H_{k1}$ | $H_{k2}$ | ... | $H_{kn}$ |

**k*n matrix**

FIG. 7

| TRAIN TEMPORAL RELATION-EFFECT LAYER MODULE | S101 |

↓

| ACQUIRE TIME-SERIES TARGET DATA | S103 |

↓

| INPUT TIME-SERIES TARGET DATA TO TEMPORAL RELATION-EFFECT LAYER MODULE | S105 |

↓

| ACQUIRE TIME-SERIES PREDICTION DATA | S107 |

↓

| PROVIDE TIME-SERIES PREDICTION DATA | S109 |

FIG. 8

FIG. 9

| | |
|---|---|
| TRAIN TEMPORAL RELATION-EFFECT SEQUENCE-TO-SEQUENCE MODULE | S201 |
| ↓ | |
| ACQUIRE REAL-TIME VOICE | S203 |
| ↓ | |
| DETECT INFANT VOICE DATA FROM ACQUIRED REAL-TIME VOICE | S205 |
| ↓ | |
| INPUT DETECTED INFANT VOICE DATA TO TEMPORAL RELATION-EFFECT SEQUENCE-TO-SEQUENCE MODULE | S207 |
| ↓ | |
| GENERATE ANSWER DATA BASED ON QUERY DATA OUTPUT FROM TEMPORAL RELATION-EFFECT SEQUENCE-TO-SEQUENCE MODULE | S209 |
| ↓ | |
| DETECT GUARDIAN VOICE DATA FROM REAL-TIME VOICE | S211 |
| ↓ | |
| ACQUIRE GUARDIAN VOICE ANALYSIS DATA FOR DETECTED GUARDIAN VOICE DATA BASED ON TEMPORAL RELATION-EFFECT SEQUENCE-TO-SEQUENCE MODULE | S213 |
| ↓ | |
| UPDATE TEMPORAL RELATION-EFFECT SEQUENCE-TO-SEQUENCE MODULE BASED ON ACQUIRED GUARDIAN VOICE ANALYSIS DATA | S215 |
| ↓ | |
| PROVIDE INFANT EDUCATION PLATFORM PROVIDING SERVICE BASED ON UPDATED TEMPORAL RELATION-EFFECT SEQUENCE-TO-SEQUENCE MODULE | S217 |

Europäisches
Patentamt

European
Patent Office

Office européen
des brevets

# EUROPEAN SEARCH REPORT

**Application Number**

EP 23 21 6961

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SIM SUNGHYUN ET AL: "Temporal Attention Gate Network With Temporal Decomposition for Improved Prediction Accuracy of Univariate Time-Series Data", 2023 INTERNATIONAL CONFERENCE ON ARTIFICIAL INTELLIGENCE IN INFORMATION AND COMMUNICATION (ICAIIC), IEEE, 20 February 2023 (2023-02-20), pages 122-127, XP034315062, DOI: 10.1109/ICAIIC57133.2023.10067135 [retrieved on 2023-03-23] * abstract; figure 5 * * page 125, column 2, line 31 – line 37 * * section III-A * * section III-B * * section III-C * * section IV-A * * section IV-B * * equations (11)-(12) * | 1-12 | INV. G06N3/09 G06N3/0442 ADD. G06N3/0455 G06N3/0464 G06N3/047 G06N3/0475 |
| | ----- | | |
| X | CHEMPAVATHY B ET AL: "AI based Chatbots using Deep Neural Networks in Education", 2022 SECOND INTERNATIONAL CONFERENCE ON ARTIFICIAL INTELLIGENCE AND SMART ENERGY (ICAIS), IEEE, 23 February 2022 (2022-02-23), pages 124-130, XP034107785, DOI: 10.1109/ICAIS53314.2022.9742771 * abstract; figures 1, 3 * * page 125, column 2, paragraph 5 * * page 129, column 2, paragraph 4 * * page 127, column 2, line 22 – line 26 * * section III * | 13-15 | **TECHNICAL FIELDS SEARCHED (IPC)** G06N |
| | ----- | | |
| | -/-- | | |

The present search report has been drawn up for all claims

| Place of search | Date of completion of the search | Examiner |
|---|---|---|
| The Hague | 3 May 2024 | Aoun, Marc |

CATEGORY OF CITED DOCUMENTS

X : particularly relevant if taken alone
Y : particularly relevant if combined with another
　document of the same category
A : technological background
O : non-written disclosure
P : intermediate document

T : theory or principle underlying the invention
E : earlier patent document, but published on, or
　after the filing date
D : document cited in the application
L : document cited for other reasons

......................................................................
& : member of the same patent family, corresponding
　document

EPO FORM 1503 03.82 (P04C01)

| Europäisches Patentamt European Patent Office Office européen des brevets | **EUROPEAN SEARCH REPORT** | Application Number EP 23 21 6961 |
|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WEI LINXUAN ET AL: "Multi-Task Based Mispronunciation Detection of Children Speech Using Multi-Lingual Information", 2019 ASIA-PACIFIC SIGNAL AND INFORMATION PROCESSING ASSOCIATION ANNUAL SUMMIT AND CONFERENCE (APSIPA ASC), IEEE, 18 November 2019 (2019-11-18), pages 1791-1794, XP033733302, DOI: 10.1109/APSIPAASC47483.2019.9023351 [retrieved on 2020-03-02] * abstract; figures 1, 2 * * section II-A * ----- | 13-15 | |

| | | TECHNICAL FIELDS SEARCHED (IPC) |
|---|---|---|

The present search report has been drawn up for all claims

| Place of search | Date of completion of the search | Examiner |
|---|---|---|
| The Hague | 3 May 2024 | Aoun, Marc |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

**Patent documents cited in the description**

- KR 1020230115777
- KR 102011689 B1
- KR 20160071111 A